# EUROPEAN PATENT APPLICATION

(11) **EP 1 738 887 A1**
(43) Date of publication of application: **03.01.2007**
(21) Application number: 05254042.4
(22) Date of filing: 29.06.2005
(51) Int. Cl.: B29C 43/56, B29C 43/52, B29C 43/02, B29C 59/02

(54) **Gas assisted compression moulding method**

(71) Applicant: Munekata Co. Ltd., Fukushima-shi, Fukushima-ken (JP)
(72) Inventor: Ohba, Kazuya c/o MUNEKATA Co. Ltd., Fukushima-ken (JP); Tateyama, Hirofumi, Fukushima-ken (JP); Tsuchiya, Atsushi, Fukushima-shi, Fukushima-ken (JP)
(74) Representative: Jones, William

(57) **Abstract**

In press moulding or embossing a thermoplastic resin for producing a moulded product excellent in transferability of microscopic surface asperities and having high quality with high productivity, a preform (X-1) of a thermoplastic resin is heated to about the hardening temperature of the thermoplastic resin constituting the preform, the preform is embedded between an upper half (8a) and a lower half (8b) of a mould which are maintained at a temperature of about the hardening temperature of the thermoplastic resin, and then the mould is closed at a low pressure. Carbon dioxide is dissolved in a surface of the preform by charging carbon dioxide through inlet (11) between a surface of the mould and the surface of the preform in order to reduce the viscosity of the preform surface. The surface of the mould is brought into contact with the preform having the reduced surface viscosity by increasing a pressing pressure. Then, carbon dioxide is discharged, and a moulded product is extracted. Thus, the moulded product excellent in transferability of microscopic surface asperities and having high quality can be produced with high productivity.

## Description

### 1. FIELD OF THE INVENTION

The present invention relates to methods for moulding thermoplastic resins by dissolving resin-soluble gases such as carbon dioxide in surfaces of preforms of thermoplastic resins. More specifically, the present invention relates to methods for moulding thermoplastic resins using preforms and moulds having restrictive temperature conditions.

### 2. DESCRIPTION OF THE RELATED ART

Products such as optical recording media and light-transmitting substrates have microscopic surface patterns and are required to have high transferability of the surface patterns. Products such as optical lenses for cameras and printers are required to have low birefringence. Conventionally, these products are manufactured by injection moulding of thermoplastic resins such as polycarbonates (referred to as PC hereinafter) and acrylic resins (referred to as PMMA hereinafter).

Nowadays, these products are required to have lower birefringence or more fine transferability, but there are limitations in manufacturing such products by conventional injection moulding. Consequently, specific forming or processing methods such as press moulding or embossing have been proposed.

In press moulding, after embedding a preform in a cavity of a mould, isotactic pressing is performed by decreasing the cavity volume in order to uniformly generate a high internal pressure in the cavity. As a result, residual strain in a moulded product is decreased because uniform dwelling is accomplished, unlike in injection moulding. Furthermore, the transferability of the mould is greatly improved.

In embossing, generally, a design such as a pattern or a shape is transferred by using a roller or a mould. However, in the present invention, embossing is defined as that only the pattern is transferred by using a press mould (the shape is not transferred).

Conventionally, in press moulding and embossing of a thermoplastic resin preform, the mould and preform are heated to a temperature higher than the hardening temperature of the thermoplastic resin before the moulding, as described above, and then the pressure of the mould is increased for pressing. Then, the moulded product is extracted from the mould after the mould is cooled to a temperature lower than the hardening temperature of the thermoplastic resin. However, in these processes, the preform is melted again before a pressing process. Therefore, preheating of the resin in the mould and a long cycle time are disadvantageously required, though sufficient transferability of microscopic patterns and low birefringence are achieved. Furthermore, since the preform is repeatedly melted and cooled, the shrinkage ratio during cooling is not constant and the dimensional accuracy decreases.

Some moulding methods in which cavities before an injection process are filled with a gaseous material in order to improve the transferability to moulded products have been disclosed.
[Patent Document 1: Japanese Unexamined Patent Application Publication No. 10(1998)-128783]

This published patent relates to a method for preventing solidification or an increase in viscosity of a thermoplastic resin during a resin filling process and for transferring a surface form of a mould to a moulded product with high accuracy in injection moulding of the thermoplastic resin. The method does not use a complicated apparatus or mould and is economically performed by embedding the melted thermoplastic resin in a cooled mould filled with carbon dioxide under a pressure higher than that when 0.1 wt% or more carbon dioxide is dissolved in the thermoplastic resin, and by moulding the thermoplastic resin after lowering the hardening temperature of the thermoplastic resin surface.

However, this published patent does not relate to press moulding and embossing. Furthermore, since the hardening temperature of the resin is decreased by filling the mould with carbon dioxide, this method cannot be applied to press moulding.
[Patent Document 2: Japanese Unexamined Patent Application Publication No. 2002-052583]

This published patent relates to a method of obtaining a moulded product having excellent transferability and brilliance. In injection moulding, immediately after a resin is injected into a cavity, a carbon dioxide gas is charged to a skin layer of the moulded product, where the cavity 1 and the resin are in contact with each other, to move back the skin layer to form a space 13 between the cavity and the skin layer. As a result, growth of the skin layer stops and the carbon dioxide gas is dissolved in the skin layer to soften the skin layer. Then, the skin layer is again moulded by increasing the applied pressure on the resin and is cooled to be hardened under dwelling.

However, the preform prepared by the method in this published patent cannot be applied to press moulding and embossing, because of the different moulding principle.
[Patent Document 3: Japanese Unexamined Patent Application Publication No. 2003-320556]

This published patent relates to a moulding method for efficiently and inexpensively manufacturing a moulded product by modifying only the surface portion so as to have necessary properties without using a resin mixed with a modifier in advance. The modifier is dissolved or dispersed in a compressed gas that is soluble in a melted resin to be injected. A mould cavity is filled with the compressed gas and then the melted resin is injected into the mould cavity.

However, this published patent relates to a method for filling the mould with the compressed gas in advance though the gas has solubility. Therefore, this method cannot be applied to press moulding and embossing.

### SUMMARY OF THE INVENTION

### PROBLEMS TO BE SOLVED BY THE INVENTION

It is a first object of the present invention to increase the productivity in thermoplastic resin moulding by decreasing moulding cycle time.

It is a second object of the present invention to provide a moulding method or process for obtaining moulded products further improved in transferability of microscopic patterns and in birefringence in thermoplastic resin moulding.

It is a third object of the present invention to provide a moulding method or process for obtaining moulded products excellent in dimensional accuracy in thermoplastic resin moulding.

### MEANS FOR SOLVING PROBLEM

In order to achieve the above-mentioned objects, a first aspect of the present invention is a method for moulding a thermoplastic resin to obtain a moulded product excellent in transferability of microscopic surface asperities and in dimensional accuracy with a short moulding cycle time by: heating a preform of a thermoplastic resin to about hardening temperature of the thermoplastic resin constituting the preform; embedding the preform between an upper half and a lower half of a mould which are maintained at a temperature lower than the hardening temperature of the thermoplastic resin; closing the mould at a low pressure; dissolving a resin-soluble gas in a surface of the preform by charging the resin-soluble gas between a cavity surface of the mould and the surface of the preform to reduce the viscosity of the preform surface; increasing a pressing pressure of the mould to bring the cavity surface into contact at a high pressure with the preform having the reduced surface viscosity; discharging the remaining resin-soluble gas from the mould; and extracting the moulded product.

A second aspect of the present invention is a method for moulding a thermoplastic resin to obtain a moulded product having greatly improved transferability of microscopic surface asperities and low birefringence with a short moulding cycle time by: heating a preform of a thermoplastic resin to a temperature higher than the hardening temperature of the thermoplastic resin constituting the preform; embedding the preform between an upper half and a lower half of a mould which are heated to a temperature higher than the hardening temperature of the thermoplastic resin; closing the mould at a low pressure; dissolving a resin-soluble gas in a surface of the preform by charging the resin-soluble gas between a cavity surface of the mould and the surface of the preform to reduce the viscosity of the preform surface; increasing a pressing pressure of the mould to bring the mould surface into contact at a high pressure with the preform having the reduced surface viscosity; discharging the remaining resin-soluble gas from the mould; cooling the mould and the resin to a temperature lower than the hardening temperature of the thermoplastic resin; and extracting the moulded product.

A third aspect of the present invention is the method for moulding a thermoplastic resin according to the first or second aspect, wherein a degree of decrease in viscosity and a thickness of a layer having the decreased viscosity in the preform surface are strictly controlled by changing the pressure and temperature of the resin-soluble gas charged between the cavity surface of the mould and the preform surface and by changing the contact time of the preform with the resin-soluble gas.

A fourth aspect of the present invention is a method for moulding a thermoplastic resin to obtain a moulded product having high transferability of microscopic surface asperities and high quality with a short moulding cycle time by: embedding a preform of a thermoplastic resin between a stamper which is maintained at a temperature lower than the hardening temperature of the thermoplastic resin and a lower half of a mould which is maintained at a temperature lower than the hardening temperature of the thermoplastic resin; closing the mould at a low pressure; dissolving a resin-soluble gas in a surface of the preform by charging the resin-soluble gas between a surface of the stamper and the surface of the preform to reduce the viscosity of the preform surface; increasing a pressing pressure to bring the stamper surface into contact at a high pressure with the preform having the reduced surface viscosity; discharging the remaining resin-soluble gas from the mould; and extracting the moulded product.

A fifth aspect of the present invention is a method for moulding a thermoplastic resin to obtain a moulded product having greatly improved transferability of microscopic surface asperities and high quality with a short moulding cycle time by: embedding a preform of a thermoplastic resin between a stamper which is heated to a temperature higher than the hardening temperature of the thermoplastic resin and a lower half of a mould which is maintained at a temperature lower than the hardening temperature of the thermoplastic resin; closing the mould at a low pressure; dissolving a resin-soluble gas in a preform surface by charging the resin-soluble gas between a surface of the stamper and the surface of the preform to reduce the viscosity of the preform surface; increasing a pressing pressure to bring the stamper surface into contact at a high pressure with the preform having the reduced surface viscosity; discharging the remaining resin-soluble gas; cooling the stamper and the resin to a temperature lower than the hardening temperature of the thermostatic resin; and extracting the moulded product.

A sixth aspect of the present invention is the method for moulding a thermoplastic resin according to the fourth or fifth aspect, wherein a degree of decrease in viscosity and a thickness of a layer having the decreased viscosity in the preform surface are strictly controlled by changing the pressure and temperature of the resin-soluble gas charged between the stamper surface and the preform surface and by changing the contact time of the preform with the resin-soluble gas.

A seventh aspect of the present invention is the method for moulding a thermoplastic resin according to any one of the first to sixth aspects, wherein the resin-soluble gas is selected from the group consisting of carbon dioxide, nitrogen, methane, ethane, propane, fluorocarbons having fluorine substituted for hydrogen in these hydrocarbons, and mixtures thereof.

Carbon dioxide charged in the mould is discharged at the instant when the mould is opened after the pressing process. However, when the pressure of carbon dioxide is high, carbon dioxide is preferably discharged from another path just before the mould is opened.

In the above-described first, second, fourth, and fifth aspects, when the mould temperature is denoted by Tt, the hardening temperature of the resin is denoted by Tf, and the decrease in the resin-hardening temperature by dissolving carbon dioxide is denoted by ΔTco2, the mould temperature Tt is preferably controlled to be in the following range: Tf - ΔTco2 ≤ Tt ≤ Tf.

Transferability in a moulded product is improved with a value given by Tt - (Tf - ΔTco2).

### EFFECT OF THE INVENTION

In the first and fourth aspects of the present invention, the viscosity of preform surfaces is decreased by dissolving carbon dioxide in the preform surfaces. Therefore, press moulding or embossing can be performed under conditions in which a mould is maintained at a predetermined temperature lower than a hardening temperature of a thermoplastic resin. With this, the moulding cycle time is vastly improved to increase productivity, compared with conventional methods which require heating the mould before a pressing process and cooling the mould in a cooling process. Furthermore, since the resin temperature is not changed by hardening, a moulded product can be obtained without a substantial decrease in dimensional accuracy caused by shrinkage of the resin.

In the second and fifth aspects of the present invention, since the mould is heated before a pressing process and is cooled in a cooling process, as in the conventional press moulding or embossing, the moulding cycle time is not largely improved. However, the viscosity of the preform surfaces is largely decreased and transferability of microscopic surface asperities is vastly improved. Furthermore, a vast improvement in birefringence is achieved due to strain relaxation. As described in the third and sixth aspects of the present invention, the degree of decrease in viscosity of the preform surface and the thickness of a layer having the decreased viscosity can be strictly controlled by changing the pressure and temperature of carbon dioxide charged between the mould cavity surface and the preform surface and by changing the contact time of the preform with the carbon dioxide. When moulding is performed under conditions where the layer having the decreased viscosity becomes thicker than the preform, the viscosity of the entire preform is decreased to reduce internal strain. Therefore, a moulded product having low birefringence can be obtained.

### BRIEF DESCRIPTION OF THE DRAWINGS

The invention will be described with reference to the following drawings, and in which:
Fig. 1 is a schematic diagram of a press moulding apparatus for operating the present invention.
Fig. 2 is a schematic diagram of a preform, (a) is a plan view, and (b) is a cross sectional view taken along the line A-A'.
Fig. 3 is a schematic diagram of a moulded product, (a) is a plan view, and (b) is a cross sectional view taken along the line B-B'.
Fig. 4 (a) and (b) are schematic diagrams of a press moulding process according to a first aspect of the present invention.
Fig. 5 (a) and (b) are schematic diagrams of a press moulding process according to a second aspect of the present invention.
Fig. 6 is a schematic diagram of an embossing apparatus for operating the present invention.
Fig. 7 is a schematic diagram of a preform, (a) is a plan view, and (b) is a cross sectional view taken along the line C-C'.
Fig. 8 is a schematic diagram of a moulded product, (a) is a plan view, and (b) is a cross sectional view taken along the line D-D'.
Fig. 9 (a) and (b) are schematic diagrams of an embossing process according to a fourth aspect of the present invention.
Fig. 10 (a) and (b) are schematic diagrams of an embossing process according to a fifth aspect of the present invention.

### EXPRESSION OF REFERENCE NUMERALS

1: Water source
2a, 2b: Pump
3: Heater
4a, 4b, 4c, 4d, 4e, 4f: Electromagnetic valve
5: Cooler
6: Temperature regulator
7a, 7b: Temperature regulating line
8a, 8b: Mould
8c: Stamper
9a, 9b: Heat exchanger
10: Sealing member
11: Carbon dioxide feeding line
12a, 12b: Electromagnetic valve
13: Pressure sensor
14: Back-pressure regulating valve
15: Pressure-relief valve
16: Temperature sensor
17: Accumulator
18: Warmer
19: Pressure-reducing valve
20: Check valve
21: Carbon dioxide generator-injector
22: Carbon dioxide source
23: Microscopic successive V-grooves
X-1: Preform
X-2: Moulded product

### DESCRIPTION OF THE PREFERRED EMBODIMENTS

Examples of the thermoplastic resins used in the present invention include styrene resins (e.g. polystyrene, butadiene-styrene copolymer, acrylonitrile-styrene copolymer, acrylonitrile-butadiene-styrene copolymer), ABS resins, polyethylenes, polypropylenes, ethylene-propylene resins, ethylene-ethyl acrylate resins, polyvinyl chlorides, polyvinylidene chlorides, polybutenes, polycarbonates, polyacetals, polyphenylene oxides, polyvinyl alcohols, polymethyl methacrylates, saturated polyester resins (e.g. polyethylene terephthalates, polybutylene terephthalates), biodegradable polyester resins (e.g. hydroxycarboxylic acid condensates such as polylactic acid, diol-dicarboxylic acid condensates such as polybutylene succinate), polyamide resins, polyimide resins, fluoropolymers, polysulfones, polyether sulfones, polyacrylates, polyether-ether ketones, liquid crystal polymers, and mixtures thereof. Resins mixed with various types of inorganic or organic fillers are also included. Among these thermoplastic resins, amorphous resins are most preferable.

Gases effectively dissolved in surfaces of preforms are preferably used in the present invention as the resin-soluble gas. Specifically, examples of such gases include carbon dioxide, hydrocarbons such as methane, ethane, and propane, fluorocarbons having fluorine substituted for hydrogen in these hydrocarbons, and mixtures thereof. These gases can be used alone or in a combination. In particular, carbon dioxide is most preferable because of its safety, low-cost, ease in handling, and low environmental impacts.

### EXAMPLE 1

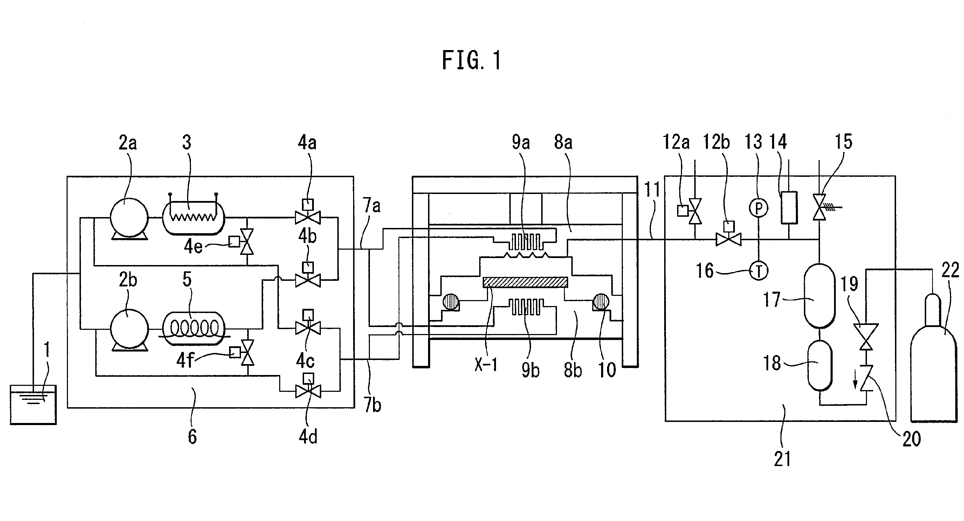

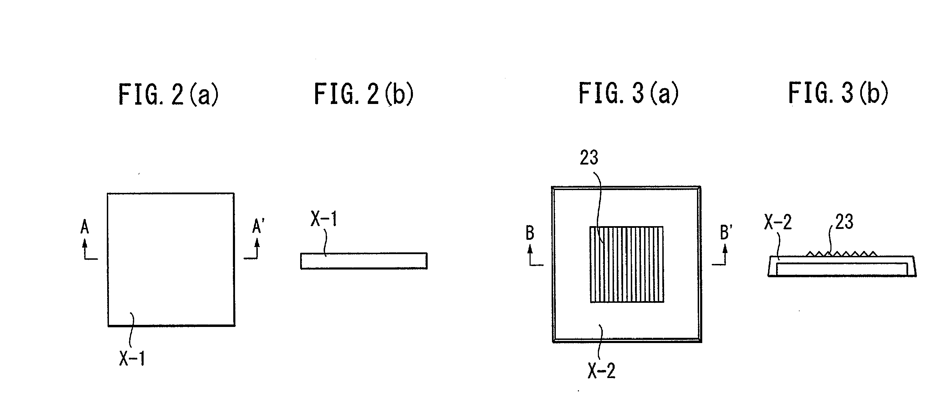

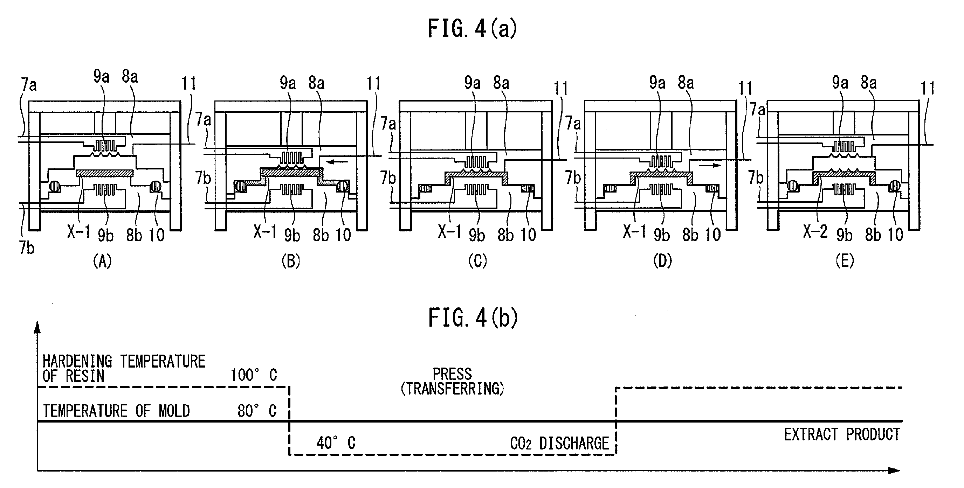

This example corresponds to the first aspect of the present invention, and will be described in detail with reference to the drawings. Fig. 1 shows the whole moulding apparatus. In Fig. 2, (a) is a plan view of a preform X-1, and (b) is a cross sectional view taken along the line A-A'. In Fig. 3, (a) is a plan view of a moulded product X-2, and (b) is a cross sectional view taken along the line B-B'. In Fig. 4, (a) shows a moulding process, and (b) shows hardening temperature of a resin changing according to the moulding process and a mould temperature.

In the drawings, reference numerals 8a and 8b denote an upper half and a lower half, respectively, of a mould for press moulding. The insides of the upper and lower halves 8a and 8b are provided with heat exchangers 9a and 9b, respectively, for heating the mould 8a and 8b by circulating hot water. The lower half 8b is provided with a sealing member 10 for guaranteeing airtightness when the mould 8a and 8b are sealed. Temperature of the mould is controlled by a temperature regulator 6 through temperature regulating lines 7a and 7b.

The temperature regulator 6 is an in-house product and is composed of pumps 2a and 2b, a heater 3, a cooler 5, and electromagnetic valves 4a, 4b, 4c, 4d, 4e, and 4f. The regulator operates to pump water from a water source 1 by the pump 2a to the heater 3 for heating the water or by the pump 2b to the cooler 5 for cooling the water, and operates to circulate the water in the heat exchangers 9a and 9b of the upper and lower halves 8a and 8b by switching the electromagnetic valves 4a, 4b, 4c, 4d, 4e, and 4f. For feeding the hot water to the mould 8a and 8b, the electromagnetic valves 4a, 4c, and 4e are opened. For feeding the cold water to the mould 8a and 8b, the electromagnetic valves 4b, 4d, and 4f are opened. Charging of carbon dioxide into the mould 8a and 8b is performed by a carbon dioxide generator-injector 21 through a carbon dioxide feeding line 11. The carbon dioxide generator-injector 21 is an in-house product and is composed of electromagnetic valves 12a and 12b, a pressure sensor 13, a back-pressure regulating valve 14, a pressure-relief valve 15, a temperature sensor 16, an accumulator 17, a warmer 18, a pressure-reducing valve 19, and a check valve 20. The generator-injector operates to control pressure of carbon dioxide generated in a carbon dioxide source 22 by using the pressure-reducing valve 19, to control temperature of carbon dioxide by the warmer 18, and operates to accumulate carbon dioxide in the accumulator 17. The pressure is finely controlled by the back-pressure regulating valve 14, and charge and discharge of carbon dioxide is conducted by using the electromagnetic valves 12a and 12b. For charging carbon dioxide, the electromagnetic valve 12b is opened. For discharging carbon dioxide, the electromagnetic valve 12a is opened. When the mould 8a and 8b is closed in the moulding process, the pressure of carbon dioxide charged in the mould 8a and 8b can be maintained by the sealing member 10.

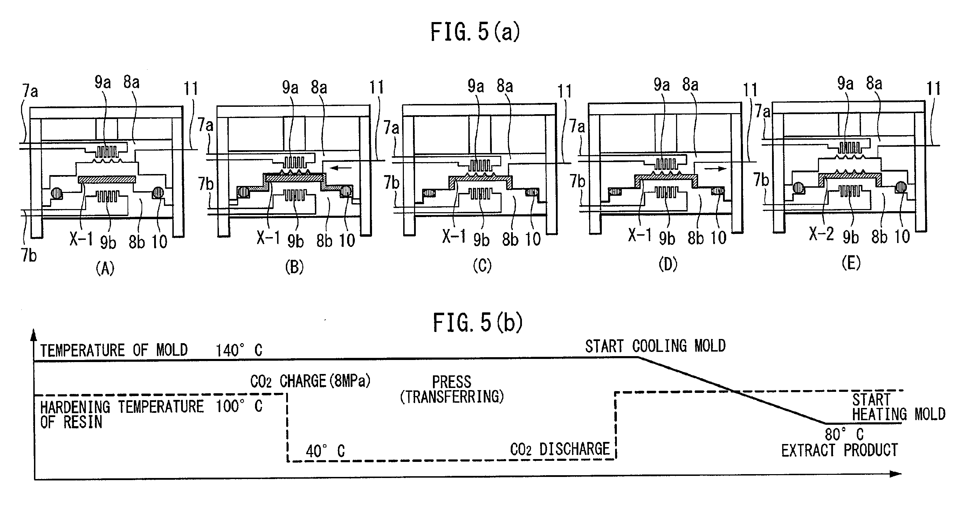

The press moulding process according to the first, second, third, and seventh aspects of the present invention will be described with reference to Figs. 4 and 5. PMMA (trade name: MGSS, Sumitomo Chemical Co., Ltd.) was used as a resin. The hardening temperature of this resin is about 100°C. The preform X-1 is shown in Fig. 2, and the form of the moulded product X-2 is shown in Fig. 3. The preform X-1 was in the form of a plate having a length of 28 mm, a width of 28 mm, and a thickness of 3 mm. The moulded product X-2 was in a form of a box having a length of 32 mm, a width of 32 mm, a height of 4 mm, and a thickness of 1.5 mm. The center area of the moulded product X-2 had microscopic successive V-grooves 23 having a width of 20 µm and a depth of 5.7 µm.

The moulding process according to the first aspect of the present invention will be described with reference to Fig. 4. At first, as shown in (A), PMMA preform X-1 heated to 80°C was placed between the upper half 8a and the lower half 8b which were maintained at 80°C by the temperature regulator 6 and the temperature regulating lines 7a and 7b. Then, as shown in (B), the upper half 8a was closed by immediate proximity of the surface of the preform X-1, and carbon dioxide having a pressure of 8 MPa and a temperature of 40°C was charged between the upper half 8a and the preform X-1 for 1 second from the carbon dioxide generator-injector 21 through the carbon dioxide feeding line 11. With this, the hardening temperature of the resin surface was decreased by about 60°C, i.e. from about 100°C of PMMA to about 40°C. Then, as shown in (C), the upper half 8a was sealed at a pressure of 50 MPa, and the pressure was maintained for 5 seconds. Then, as shown in (D), carbon dioxide in the carbon dioxide feeding line 11 was discharged. Then, as shown in (E), the upper half 8a was opened to extract the moulded product X-2. Conditions for moulding are shown in Table 1, and evaluation of the moulded product is shown in Table 2.

### EXAMPLE 2

Moulding was performed as in EXAMPLE 1 except that the charging pressure of carbon dioxide was 15 MPa. Conditions for moulding are shown in Table 1, and evaluation of the moulded product is shown in Table 2.

### EXAMPLE 3

Moulding was performed as in EXAMPLE 1 except that the temperature of carbon dioxide was 60°C. Conditions for moulding are shown in Table 1, and evaluation of the moulded product is shown in Table 2.

### EXAMPLE 4

Moulding was performed as in EXAMPLE 1 except that the contact time of carbon dioxide was 5 seconds. Conditions for moulding are shown in Table 1, and evaluation of the moulded product is shown in Table 2.

### EXAMPLE 5

Moulding was performed as shown in Fig. 5 by using the same apparatus and resin as in EXAMPLE 1. At first, as shown in (A), PMMA preform X-1 heated to 140°C was placed between the upper half 8a and the lower half 8b of the mould which were heated to 140°C by the temperature regulator 6 and the temperature regulating lines 7a and 7b. Then, as shown in (B), the upper half 8a was closed by immediate proximity of the surface of the preform X-1, and carbon dioxide having a pressure of 8 MPa and a temperature of 40°C was charged between the upper half 8a and the preform X-1 for 1 second from the carbon dioxide generator-injector 21 through the carbon dioxide feeding line 11. With this, the hardening temperature of the resin surface was decreased by about 60°C, i.e. from about 100°C of PMMA to about 40°C. Then, as shown in (C), the upper half 8a was sealed at a pressure of 50 MPa, and the pressure was maintained for 5 seconds. Then, as shown in (D), carbon dioxide in the carbon dioxide feeding line 11 was discharged, and the upper half 8a was cooled to 80°C by the temperature regulator 6 and the temperature regulating lines 7a and 7b. Then, as shown in (E), the upper half 8a was opened to extract the moulded product X-2. Conditions for moulding are shown in Table 1, and evaluation of the moulded product is shown in Table 2.

### EXAMPLE 6

Moulding was performed as in EXAMPLE 2 except that a gas mixture of carbon dioxide and nitrogen in a ratio of 3:1 was used as a resin-soluble gas. Evaluation of the moulded product is shown in Table 2. Change in ratio of carbon dioxide and nitrogen can control only transferability of the moulded product.

### COMPARATIVE EXAMPLE 1

Moulding was performed as in EXAMPLE 1 except that carbon dioxide was not charged. Conditions for moulding are shown in Table 1, and evaluation of the moulded product is shown in Table 2.

### EXAMPLE 7

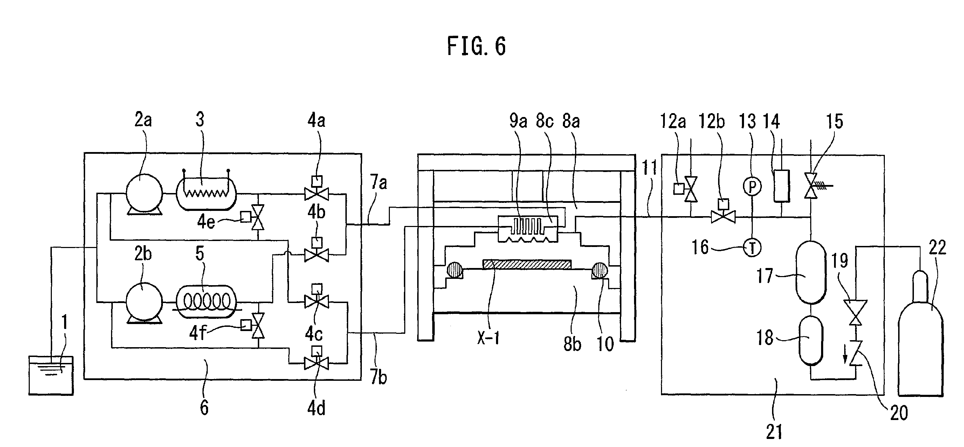

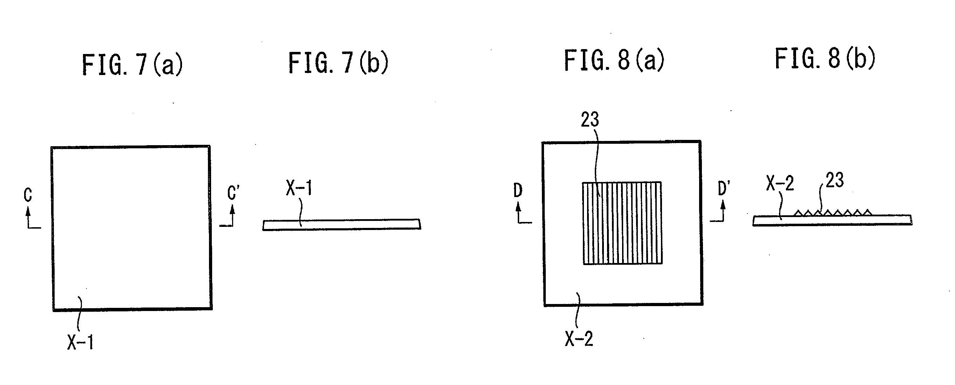

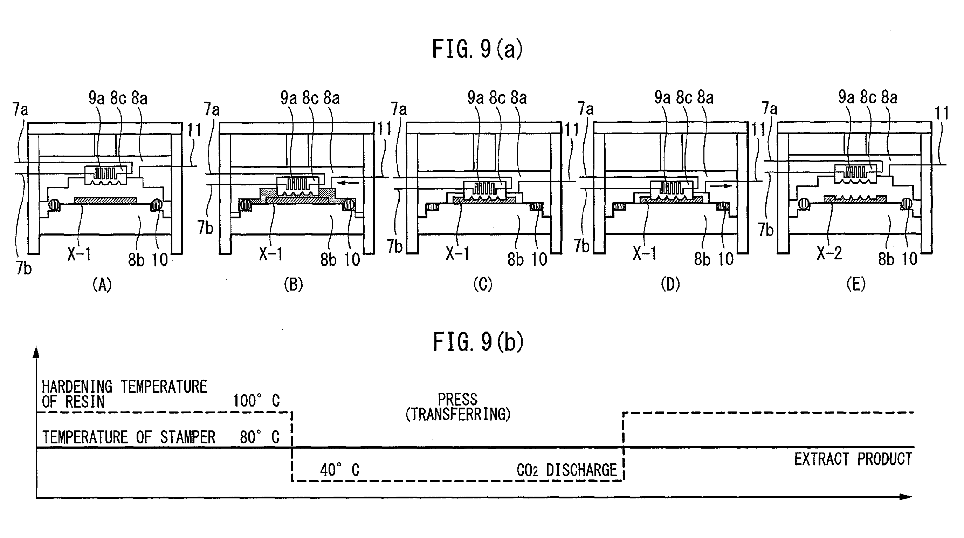

This example corresponds to the fourth aspect of the present invention. Fig. 6 shows an apparatus of this example, Fig. 7 (a) and (b) shows a preform X-1, and Fig. 8 (a) and (b) shows a moulded product X-2. In Fig. 9, (a) shows a moulding process, and (b) shows hardening temperature of a resin changing according to the moulding process and a stamper temperature. Reference numerals 8a and 8b denote an upper half and a lower half of a mould for embossing, and 8c denotes the stamper. Temperature of the stamper is controlled by circulating a heating medium in a heat exchanger 9a in the stamper 8c by the temperature regulator 6 through temperature regulating lines 7a and 7b. The temperature regulator 6 is an in-house product and is composed of pumps 2a and 2b, a heater 3, a cooler 5, and electromagnetic valves 4a, 4b, 4c, 4d, 4e, and 4f. The regulator operates to pump water from a water source 1 by the pump 2a to the heater 3 for heating the water or with the pump 2b to the cooler 5 for cooling the water, and operates to circulate the water in the heat exchanger 9a of the stamper 8c by switching the electromagnetic valves 4a, 4b, 4c, 4d, 4e, and 4f. For feeding hot water to the stamper 8c, the electromagnetic valves 4a, 4c, and 4e are opened. For feeding cold water to the stamper 8c, the electromagnetic valves 4b, 4d, and 4f are opened. Charging of carbon dioxide into the mould is performed by a carbon dioxide generator-injector 21 through a carbon dioxide feeding line 11. The carbon dioxide generator-injector 21 is an in-house product and is composed of electromagnetic valves 12a and 12b, a pressure sensor 13, a back-pressure regulating valve 14, a pressure-relief valve 15, a temperature sensor 16, an accumulator 17, a warmer 18, a pressure-reducing valve 19, and a check valve 20. The generator-injector operates to control pressure of carbon dioxide generated in a carbon dioxide source 22 by using the pressure-reducing valve 19, to control temperature of carbon dioxide by the warmer 18, and operates to accumulate carbon dioxide in the accumulator 17. The pressure is finely controlled by the back-pressure regulating valve 14, and charge and discharge of carbon dioxide is conducted by the electromagnetic valves 12a and 12b. For charging carbon dioxide, the electromagnetic valve 12b is opened. For discharging carbon dioxide, the electromagnetic valve 12a is opened. When the mould 8a and 8b is closed in the moulding process, the pressure of carbon dioxide charged in the mould can be maintained by the sealing member 10.

Press moulding according to the fourth, fifth, sixth, and seventh aspects of the present invention will be described with reference to Fig. 9, (a) and (b) or Fig. 10, (a) and (b). PMMA (trade name: MGSS, Sumitomo Chemical Co., Ltd.) was used as a resin. The hardening temperature of the resin is about 100°C. As shown in Figs. 7 and 8, the preform X-1 and the moulded product X-2 were in the form of a plate having a length of 32 mm, a width of 32 mm, and a thickness of 1.5 mm. The center area of the moulded product X-2 had microscopic successive V-grooves 23 having a width of 20 µm and a depth of 5.7 µm.

The moulding process will be described with reference to Fig. 9, (a) and (b). At first, as shown in (A), a preform X-1 of PMMA at ambient temperature was placed between the lower mould 8b at 80°C and the stamper 8c which was maintained at 80°C by the temperature regulator 6 and the temperature regulating lines 7a and 7b. Then, as shown in (B), the stamper 8c was closed by immediate proximity of the surface of the preform X-1, and carbon dioxide having a pressure of 15 MPa and a temperature of 40°C was charged between the stamper 8c and the preform X-1 for 1 second from the carbon dioxide generator-injector 21 through the carbon dioxide feeding line 11. With this, the hardening temperature of the resin decreased by about 60°C, i.e. from about 100°C of PMMA to about 40°C. Then, as shown in (C), the upper half 8a was sealed at a pressure of 50 MPa, and the pressure was maintained for 5 seconds. Then, as shown in (D), carbon dioxide in the carbon dioxide feeding line 11 was discharged. Then, as shown in (E), the upper half 8a was opened to extract the moulded product X-2. Conditions for moulding are shown in Table 3, and evaluation of the moulded product is shown in Table 4.

### EXAMPLE 8

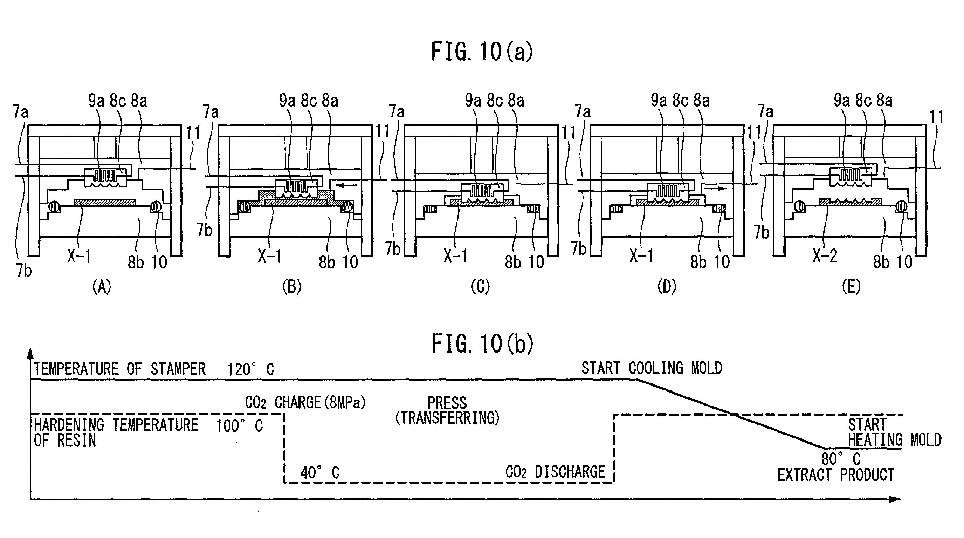

Moulding was performed as shown in Fig. 10, (a) and (b) by using the same apparatus and resin as in EXAMPLE 7. At first, as shown in (A), a preform X-1 of PMMA at ambient temperature was placed between the lower half 8b at 80°C and the stamper 8c which was heated to 120°C by the temperature regulator 6 and the temperature regulating lines 7a and 7b.

Then, as shown in (B), the stamper 8c was closed by immediate proximity of the surface of the preform X-1, and carbon dioxide having a pressure of 8 MPa and a temperature of 40°C was charged between the stamper 8c and the preform X-1 for 1 second from the carbon dioxide generator-injector 21 through the carbon dioxide feeding line 11. With this, the hardening temperature of the resin decreased by about 60°C, i.e. from about 100°C of PMMA to about 40°C. Then, as shown in (C), the upper mould 8a was sealed at a pressure of 50 MPa, and the pressure was maintained for 5 seconds. Then, as shown in (D), carbon dioxide in the carbon dioxide feeding line 11 was discharged, and the stamper 8c was cooled to 80°C by the temperature regulator 6 and the temperature regulating lines 7a and 7b. Then, as shown in (E), the upper half 8a was opened to extract the moulded product X-2. Conditions for moulding are shown in Table 3, and evaluation of the moulded product is shown in Table 4.

### COMPARATIVE EXAMPLE 2

Moulding was performed as in EXAMPLE 8 except that carbon dioxide was not charged. Conditions for moulding are shown in Table 3, and evaluation of the moulded product is shown in Table 4.

Since the results of EXAMPLE 6 according to the sixth aspect of the present invention were the same as those in EXAMPLES 2 to 5, the description is omitted.

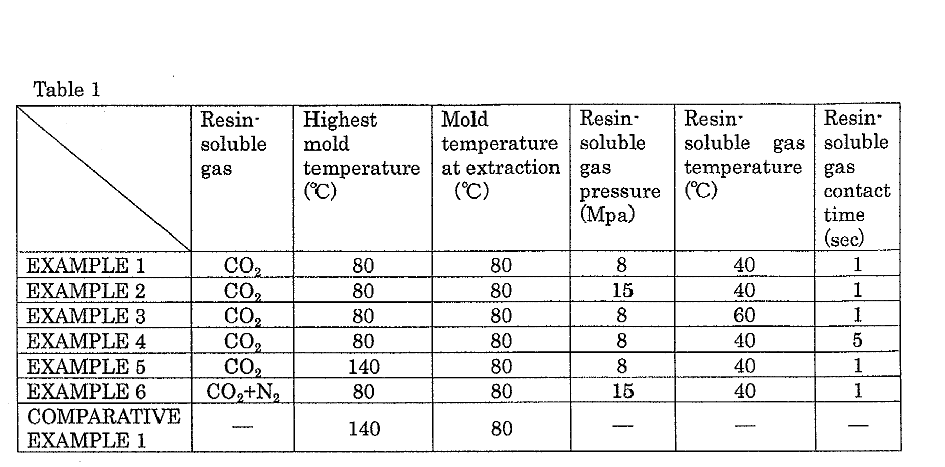

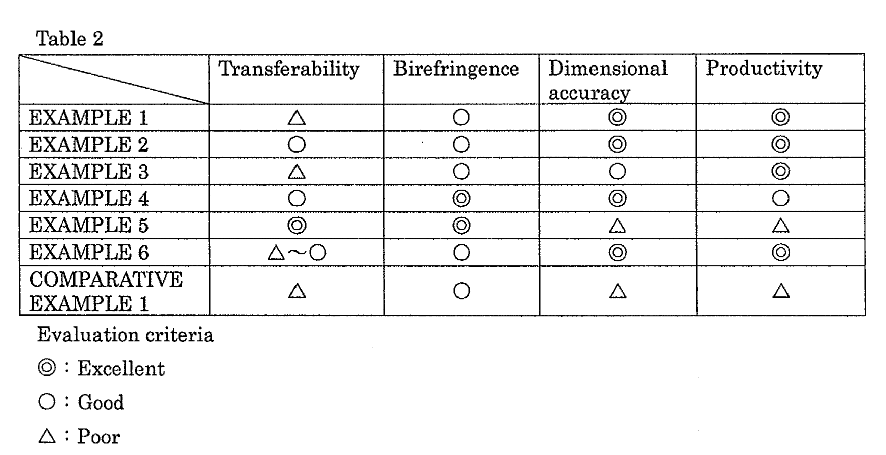

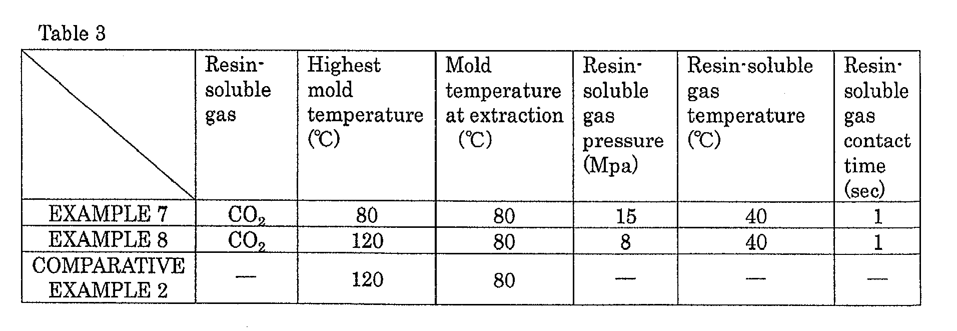

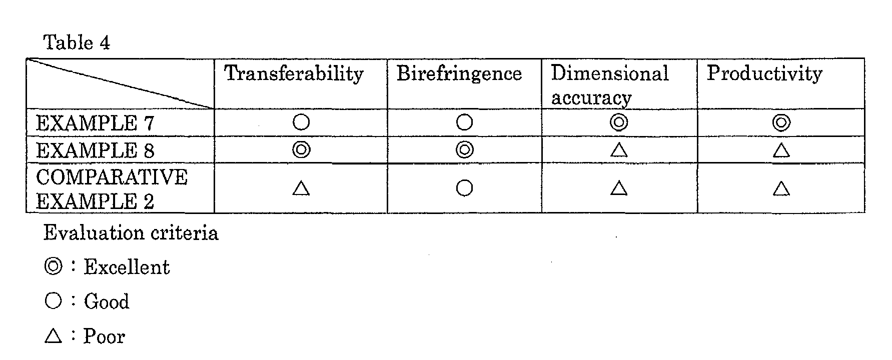

## Claims

1. A method for moulding a thermoplastic resin to obtain a moulded product excellent in transferability of microscopic surface asperities and in dimensional accuracy with a short moulding cycle time, the method comprising the steps of:
heating a preform of a thermoplastic resin to about the hardening temperature of the thermoplastic resin constituting the preform;
embedding the preform between an upper half and a lower half of a mould which are maintained at a temperature lower than the hardening temperature of the thermoplastic resin;
closing the mould at a low pressure;
dissolving a resin-soluble gas in a surface of the preform by charging the resin-soluble gas between a cavity surface of the mould and the surface of the preform to reduce the viscosity of the preform surface;
increasing a pressing pressure of the mould to bring the cavity surface into contact at a high pressure with the preform having the reduced surface viscosity;
discharging the remaining resin-soluble gas from the mould; and
extracting the moulded product.

2. A method for moulding a thermoplastic resin to obtain a moulded product having greatly improved transferability of microscopic surface asperities and low birefringence with a short moulding cycle time, the method comprising the steps of:
heating a preform of a thermoplastic resin to a temperature higher than the hardening temperature of the thermoplastic resin constituting the preform;
embedding the preform between an upper half and a lower half of a mould which are heated to a temperature higher than the hardening temperature of the thermoplastic resin;
closing the mould at a low pressure;
dissolving a resin-soluble gas in a surface of the preform by charging the resin-soluble gas between a cavity surface of the mould and the surface of the preform to reduce the viscosity of the preform surface;
increasing a pressing pressure of the mould to bring the cavity surface into contact at a high pressure with the preform having the reduced surface viscosity;
discharging the remaining resin-soluble gas from the mould;
cooling the mould and the resin to a temperature lower than the hardening temperature of the thermoplastic resin; and
extracting the moulded product.

3. The method for moulding a thermoplastic resin according to claim 1 or 2, wherein a degree of decrease in viscosity and a thickness of a layer having the decreased viscosity in the preform surface are strictly controlled by changing the pressure and temperature of the resin-soluble gas charged between the cavity surface of the mould and the preform surface and by changing the contact time of the preform with the resin-soluble gas.

4. A method for moulding a thermoplastic resin to obtain a moulded product having high transferability of microscopic surface asperities and high quality with a short moulding cycle time, the method comprising the steps of:
embedding a preform of a thermoplastic resin between a stamper which is maintained at a temperature lower than the hardening temperature of the thermoplastic resin and a lower half of a mould which is maintained at a temperature lower than the hardening temperature of the thermoplastic resin;
closing the mould at a low pressure;
dissolving a resin-soluble gas in a surface of the preform by charging the resin-soluble gas between a surface of the stamper and the surface of the preform to reduce the viscosity of the preform surface;
increasing a pressing pressure to bring the stamper surface into contact at a high pressure with the preform having the reduced surface viscosity;
discharging the remaining resin-soluble gas from the mould; and
extracting the moulded product.

5. A method for moulding a thermoplastic resin to obtain a moulded product having greatly improved transferability of microscopic surface asperities and high quality with a short moulding cycle time, the method comprising the steps of:
embedding a preform of a thermoplastic resin between a stamper which is heated to a temperature higher than the hardening temperature of the thermoplastic resin and a lower half of a mould which is maintained at a temperature lower than the hardening temperature of the thermoplastic resin;
closing the mould at a low pressure;
dissolving a resin-soluble gas in a surface of the preform by charging the resin-soluble gas between a surface of the stamper and the surface of the preform to reduce the viscosity of the preform surface;
increasing a pressing pressure to bring the stamper surface into contact at a high pressure with the preform having the reduced surface viscosity;
discharging the remaining resin-soluble gas;
cooling the stamper and the resin to a temperature lower than the hardening temperature of the thermostatic resin; and
extracting the moulded product.

6. The method for moulding a thermoplastic resin according to claim 4 or 5, wherein a degree of decrease in viscosity and a thickness of a layer having the decreased viscosity in the preform surface are strictly controlled by changing the pressure and temperature of the resin-soluble gas charged between the stamper surface and the preform surface and by changing the contact time of the preform with the resin-soluble gas.

7. The method for moulding a thermoplastic resin according to any one of claims 1 to 6, wherein the resin-soluble gas is selected from the group consisting of carbon dioxide, nitrogen, methane, ethane, propane, fluorocarbons having fluorine substituted for hydrogen in these hydrocarbons, and mixtures thereof.
